# EUROPEAN PATENT APPLICATION

(11) **EP 4 166 431 A1**
(43) Date of publication of application: **19.04.2023**
(21) Application number: 21202502.7
(22) Date of filing: 13.10.2021
(51) Int. Cl.: B62D 51/02, B66F 9/075

(54) **TOWING TRACTOR**

(71) Applicant: TOYOTA MATERIAL HANDLING MANUFACTURING ITALY S.p.A, 40132 Bologna (IT)
(72) Inventor: PESSO, Tommaso, 44028 POGGIO RENATICO (FERRARA) (IT)
(74) Representative: Casadei, Barbara

(57) **Abstract**

Described is a towing tractor (1) comprising a frame (2) and a connecting apparatus (50). The frame (2) comprises a fixed structure (10) and a mobile structure (20) movably connected to the fixed structure (10) and configured to support at least partly one or more operators. The connecting apparatus (50), interposed between the fixed structure (10) and the mobile structure (20), is configured to movably connect the mobile structure (20) to the fixed structure (10). The connecting apparatus comprises elastic means (51) configured to determine a mechanical suspension of the mobile structure (20) with respect to the fixed structure (10). In particular, the connecting apparatus (50) comprises a plurality of contact elements (52a, 52b, 53, 54), made at least partly of polymeric material, designed to determine one or more end stops for respective degrees of freedom of movement of the mobile structure (20) with respect to the fixed structure (10).

## Description

This invention relates to a towing tractor.

The term "towing tractor" means a small motorized vehicle driven standing up which is normally used for picking up and horizontal transport operations in warehouses, workshops, supermarkets or infrastructures such as, for example, airport and stations.

From the point of view of construction, a towing tractor of the type known in the field of the invention comprises a frame which mounts a motor for moving a towing tractor. At a functional level, the frame has a platform and a backrest. Structurally, the frame comprises a fixed structure and a mobile structure, movably connected to the fixed structure and configured to support one or more operators.

The prior art towing tractors also comprise a connecting apparatus, interposed between the fixed structure and the mobile structure and configured to movably connect the mobile structure to the fixed structure in such a way as to determine a mechanical suspension of the mobile structure with respect to the fixed structure.

The aim of the mechanical suspension is to dampen and attenuate the vibrations and/or the impacts which are normally generated during the movement of the towing tractor in such a way as to improve the comfort and the ergonomics of the one or more operators. In particular, the prior art connecting apparatuses comprise elastic means, typically springs and/or dampers.

However, these towing tractors, even in their most modern implementations, still have several drawbacks of a structural, operational and economic/productive nature, which make their use and/or production not very high performing.

Firstly, the structure of the connecting apparatus may be extremely complex and, consequently, onerous in terms of production costs and times.

Secondly, the connecting apparatus is not free of problems regarding the distribution of loads as well as the transmission of vibrations and/or impacts transmitted to the operator during the driving of the towing tractor, making the driving of the towing tractors uncomfortable.

In this context, the technical purpose of the invention is to provide a towing tractor which is free of the drawbacks of the prior art.

The aim of the invention is also to provide a towing tractor which has a simplified structure and, consequently, is less costly in economic terms.

The aim of the invention is also to provide a towing tractor which is able to considerably improve the comfort of the user during the travel phases.

The technical purpose indicated and the aims specified are fully achieved by a towing tractor comprising a frame having a platform and a backrest.

The platform has a horizontal axis of extension whilst the backrest has a main vertical axis of extension.

The frame comprises a fixed structure and a mobile structure, movably connected to the fixed structure and configured to support one or more operators.

The towing tractor also comprises a connecting apparatus, interposed between the fixed structure and the mobile structure, configured to movably connect the mobile structure to the fixed structure. The connecting apparatus comprises elastic means configured to determine a mechanical suspension of the mobile structure with respect to the fixed structure.

Advantageously, the connecting apparatus comprises a plurality of contact elements designed to determine one or more end stops for respective degrees of freedom of movement of the mobile structure relative to the fixed structure.

This technical feature considerably simplifies the structure of the towing tractor and, in particular, of the connecting apparatus.

Moreover, this technical feature improves the comfort of the one or more operators during the driving, thanks to the of damping action and attenuation of the vibrations and/or the impacts which are generated between the fixed structure and the mobile structure.

Further characteristic features and advantages of the invention will emerge more clearly from the detailed description of several preferred, but not exclusive embodiments of a towing tractor according to the invention.

The description is set out below with reference to the accompanying drawings which are provided solely for purposes of illustration without restricting the scope of the invention and in which:
- Figure 1 is a schematic view of an embodiment (by way of non-limiting example) of a portion of frame and of the connecting apparatus of the towing tractor according to the invention;
- Figure 2 is a further schematic view of the embodiment of the portion of frame and of the connecting apparatus of the towing tractor of Figure 1;
- Figure 3 is a schematic view of a detail of the embodiment of the frame and of the connecting apparatus of the towing tractor of Figure 1;
- Figure 4 is a schematic view of a further detail of the embodiment of the frame and of the connecting apparatus of the towing tractor of Figure 1;
- Figure 5 is a schematic view of a further detail of the embodiment of the frame and of the connecting apparatus of the towing tractor of Figure 1;
- Figure 6 is a schematic view of a further detail of the embodiment of the frame and of the connecting apparatus of the towing tractor of Figure 1;
- Figure 7 is a schematic view of a further detail of the embodiment of the frame and of the connecting apparatus of the towing tractor of Figure 1.

With reference to the accompanying drawings, the numeral 1 denotes a towing tractor according to the invention.

The term "towing tractor" is used to denote a motor-driven vehicle, preferably, but without limiting the scope of the invention, electric, used in short distance horizontal transport.

In particular, the term "towing tractor" means a small motorised vehicle which is normally used for picking up and horizontal transport operations in warehouses, workshops, supermarkets or infrastructures such as, for example, airport and stations.

According to a preferred, non-limiting, example embodiment of the towing tractor 1, the towing tractor is of the type with an operator standing up.

However, the inventive concept which forms the basis of the invention may be used without limitations for any type of towing tractor.

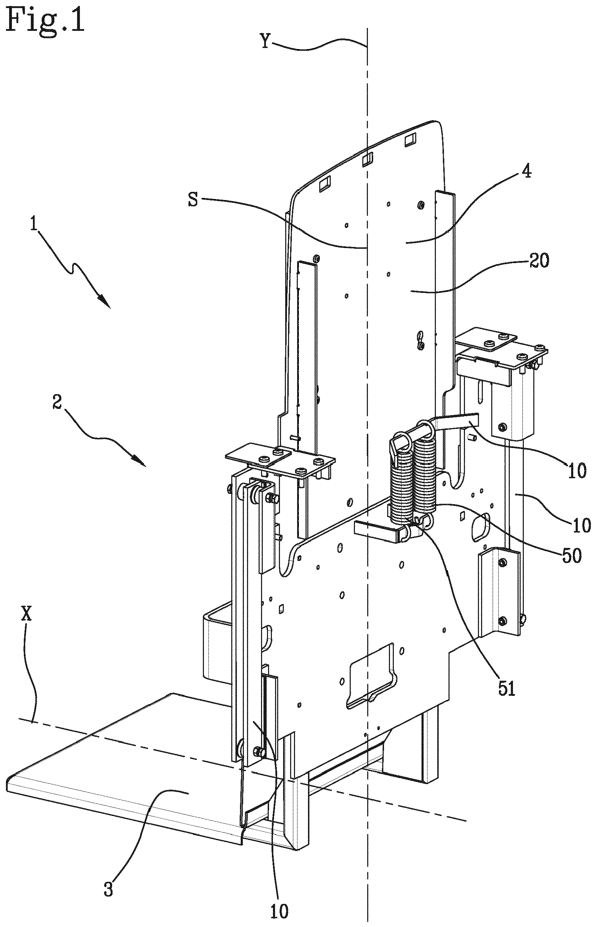

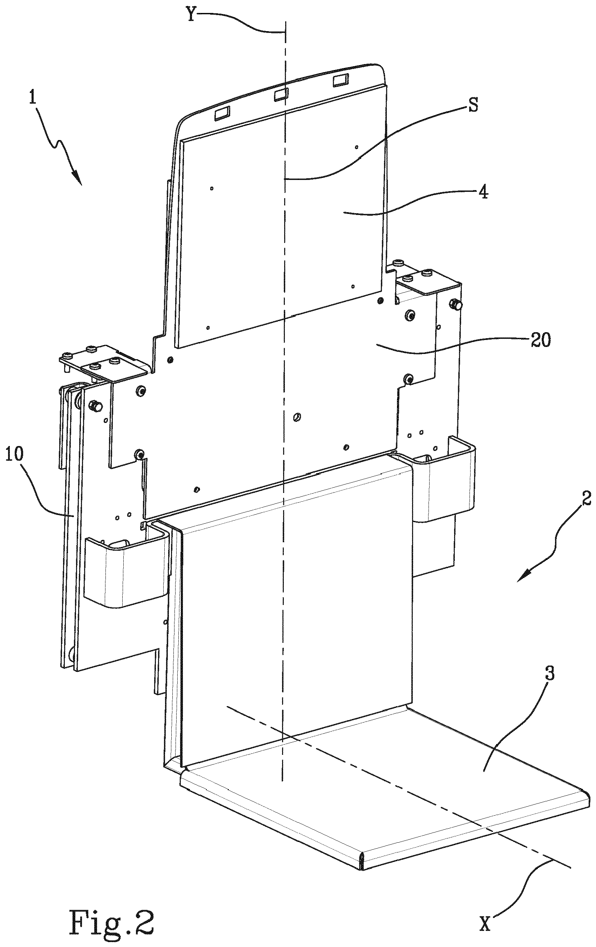

With reference to Figures 1 and 2, the towing tractor 1 comprises a frame 2 and a connecting apparatus 50.

The frame 2 has a platform 3 and a backrest 4.

The platform 3 has a horizontal axis of extension "X", while the backrest 4 has, on the other hand, a main vertical axis of extension "Y".

The expression "horizontal axis of extension" means that the platform 3 extends substantially parallel to the ground. Preferably, the term "horizontal axis of extension" means a horizontal axis substantially oriented in such a way as to pass through a front portion and a rear portion of the towing tractor 1.

Moreover, the expression "main vertical axis of extension" means that the backrest 4 extends mainly along a direction substantially perpendicular to the ground, that is, in height.

At a structural level, the frame 2 comprises a fixed structure 10 and a mobile structure 20, movably connected to the fixed structure 10 and configured to support at least partly one or more operators.

In other words, the mobile structure 20 is configured in such a way that the one or more operators discharge at least partly, preferably completely, the relative weight on it.

According to the preferred embodiment, the mobile structure 20 comprises a supporting backrest and a supporting platform. In particular, the supporting backrest and the supporting platform are integral or securely connected.

The connecting apparatus 50 is interposed between the fixed structure 10 and the mobile structure 20 and is configured to movably connect the mobile structure 20 to the fixed structure 10.

At a construction level, the connecting apparatus 50 comprises elastic means 51 configured to determine a mechanical suspension of the mobile structure 20 with respect to the fixed structure 10.

The elastic means 51 may comprise springs and/or dampers operatively interposed between the mobile structure 20 and the fixed structure 10.

Advantageously, the presence of springs and/or dampers guarantees an optimum movement of the mobile structure 20 with respect to the fixed structure 10, allowing it to move in a plurality of degrees of freedom in such a way as to obtain an optimum damping effect. The presence of springs and/or dampers also guarantees an optimum action for attenuation of vibrations and impacts during the driving of the towing tractor, in such a way as to improve the comfort of the one or more operators.

According to a particular aspect of the invention, the connecting apparatus 50 comprises a plurality of contact elements 52a, 52b, 53, 54 designed to determine one or more end stops for respective degrees of freedom of movement of the mobile structure 20 with respect to the fixed structure 10. Preferably, the contact elements 52a, 52b, 53, 54 are made at least partly of polymeric material.

Alternatively, the contact elements 52a, 52b, 53, 54 are made at least partly of bronze.

Advantageously, the use of these contact elements 52a, 52b, 53, 54 guarantees a considerable structural strength of the connecting apparatus 50 as well as a considerable reduction in production costs and times.

The contact elements 52a, 52b, 53, 54, also allow the vibrations and impacts to be absorbed and attenuated further at least partially during the driving of the towing tractor 1, further improving the comfort of the one or more operators.

Advantageously, the presence of the contact elements 52a, 52b, 53, 54 also guarantees preservation of the frame, preventing or significantly limiting possible impacts between the mobile structure 20 and the fixed structure 10.

More specifically, the contact elements 52a, 52b, 53, 54 may be made at least partly of polyamide. Advantageously, this technical feature guarantees that the contact elements 52a, 52b, 53, 54 have a robust structure having a high degree of rigidity and solidity, excellent resistance to abrasion and fatigue as well as a good chemical resistance.

Further, the contact elements 52a, 52b, 53, 54 may be made partly of glass fibre. This technical feature guarantees that the contact elements 52a, 52b, 53, 54 have an optimum robustness and strength.

Further, the contact elements 52a, 52b, 53, 54 may be made partly of silicone oil. Advantageously, this technical feature guarantees that the contact elements 52a, 52b, 53, 54 have considerable thermal stability as well as high lubricating properties.

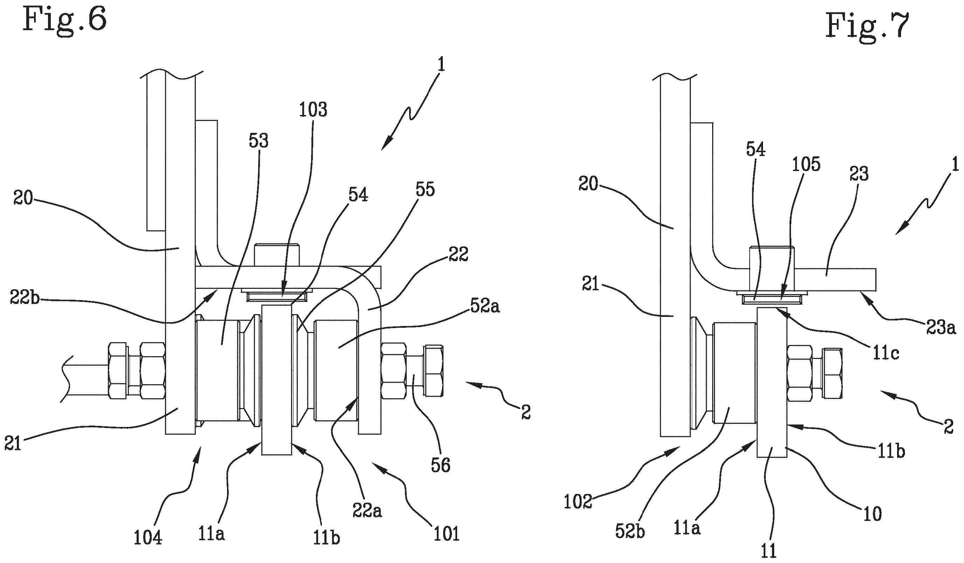

Structurally, as illustrated in Figures 6 and 7, each contact element 52a, 52b, 53, 54 may comprise a contact surface 55, made at least partly in the above-mentioned polymeric material and configured to make contact against the mobile structure 20 or the fixed structure 10, as a function of the fact that the contact element 52a, 52b, 53, 54 is fixed to the fixed structure 10 or to the mobile structure 20.

For example, according to a preferred embodiment of the contact elements 52a, 52b, 53, 54, they may comprise a mushroom body, which forms the contact surface 55.

According to a further example, the contact elements 52a, 52b, 53, 54 may comprise a plate-like body, which forms the contact surface 55.

The contact elements 52a, 52b, 53, 54 may also comprise at least one fixing element 56, preferably a threaded element, configured for securely fixing the contact surface 55 to the fixed structure 10 or to the mobile structure 20.

Advantageously, the fixing means 56, as well as guaranteeing the fixing of the contact element 52a, 52b, 53, 54, allow an adjustment of the distance between the contact surface 55 and the surface of the wall on which the contact element is fixed. In other words, by tightening the fixing means 56, a deformation or flattening effect of the contact element 52a, 52b, 53, 54 is obtained in such a way as to move the contact surface 55 towards the surface of the wall on which the contact element 52a, 52b, 53, 54 is fixed.

According to an aspect of the invention, each contact element 52a, 52b, 53, 54 may be interposed between a respective wall of the mobile structure 20 and a respective wall of the fixed structure 10, where the wall of the mobile structure 20 faces the wall of the fixed structure 10 defining a housing seat for the contact element. In particular, each contact element 52a, 52b, 53, 54 comes into contact with at least one between the wall of the mobile structure 20 and the wall of the fixed structure 10.

According to the preferred embodiment, but without limiting the scope of the invention, each housing seat has one or more threaded holes designed to receive the above-mentioned at least one element 56 for fixing the contact elements 52a, 52b, 53, 54.

Functionally, according to an aspect of the invention, the connecting apparatus 50 may comprise a plurality of contact elements 52a, 52b, 53, 54 configured to determine an end stop for respective reciprocal movements between the mobile structure 20 and the fixed structure 10. In other words, each contact element 52a, 52b, 53, 54 may be configured to define an end stop of a respective and specific reciprocal movement between the mobile structure 20 and the fixed structure 10.

In particular, the connecting apparatus 50 may comprise at least one pair of anti-rotational contact elements 52a, 52b, designed to define an end stop to a rotational movement of the mobile structure 20 with respect to the fixed structure 10.

Preferably, each pair of anti-rotational contact elements 52a, 52b comprises an upper anti-rotational contact element 52a, operatively positioned at a first height and a lower anti-rotational contact element 52b, operatively positioned at a second height different from the first height, preferably less than the first height.

In this description, the term "height" is used to mean a distance or height with respect to the platform 3. Thus, the term "lower" referred to the relation between the second height with respect to the first height means that the second height is closer to the platform 3 with respect to the first height.

Advantageously, the presence of the anti-rotational contact elements 52a, 52b guarantees a support to a tipping moment of the mobile structure 20 with respect to the fixed structure 10 determined by the weight of the operator and proportional to an acceleration in a forward direction of the towing tractor 1 as well as guaranteeing at least partly an attenuation in the vibrations due to the driving of the towing tractor 1.

For example, the anti-rotational contact elements 52a, 52b are particularly advantageous when the one or more operators discharge their relative weight against the backrest 4 of the towing tractor 1.

Preferably, as shown in the accompanying drawings, the connecting apparatus 50 comprises two pairs of anti-rotational contact elements 52a, 52b, where each pair is symmetrical with respect to the other pair to a vertical axis of symmetry "S". In other words, the two pairs of anti-rotational contact elements 52a, 52b are positioned specularly with respect to the vertical axis of symmetry "S".

Preferably, but without limiting the scope of the invention, the vertical axis of symmetry "S2" coincides with the main axis of extension "Y" of the backrest 4.

Advantageously, the presence of two pairs of anti-rotational contact elements 52a, 52b allows an optimum distribution of the tipping moment.

Irrespective of the presence of the anti-rotational contact elements 52a, 52b, the connecting apparatus 50 may comprise at least one front contact element 53 configured to define an end stop for a movement of the mobile structure 20 and of the fixed structure 10 towards each other along a direction parallel to the horizontal axis "X".

Advantageously, the presence of the at least one front contact element 53 guarantees the support of a force which tends to compress the mobile structure 20 towards the fixed structure 10 as well as allowing the vibrations due to the movement of the tractors 1 to be attenuated at least partly.

Preferably, as shown in the accompanying drawings, the connecting apparatus 50 comprises a pair of front contact elements 53 wherein each front contact element 53 is symmetrical with respect to the other front contact element 53 to the vertical axis of symmetry "S". In other words, the two front contact elements 53 are positioned specularly with respect to the vertical axis of symmetry "S".

Advantageously, the presence of at least two front contact elements 53, distributed symmetrically on the frame 2, allows an optimum distribution of the forces.

Irrespective of the presence of the anti-rotational contact elements 52a, 52b and of the front contact elements 53, the connecting apparatus 50 may comprise at least one pair of lateral contact elements 54, each of which designed to determine an end stop for a respective reciprocal movement between the mobile structure 20 and the fixed structure 10 along a direction transversal to the horizontal axis "X".

As shown in the accompanying drawings, the lateral contact elements 53 of each pair of lateral contact elements 54 are mutually symmetrical with the vertical axis of symmetry "S".

Advantageously, the presence of the lateral contact elements 54 guarantees at least partly the attenuation of possible lateral forces which act on the towing tractor 1, such as, for example, impacts, as well as guaranteeing at least partly the attenuation of the vibrations due to the driving of the towing tractor 1.

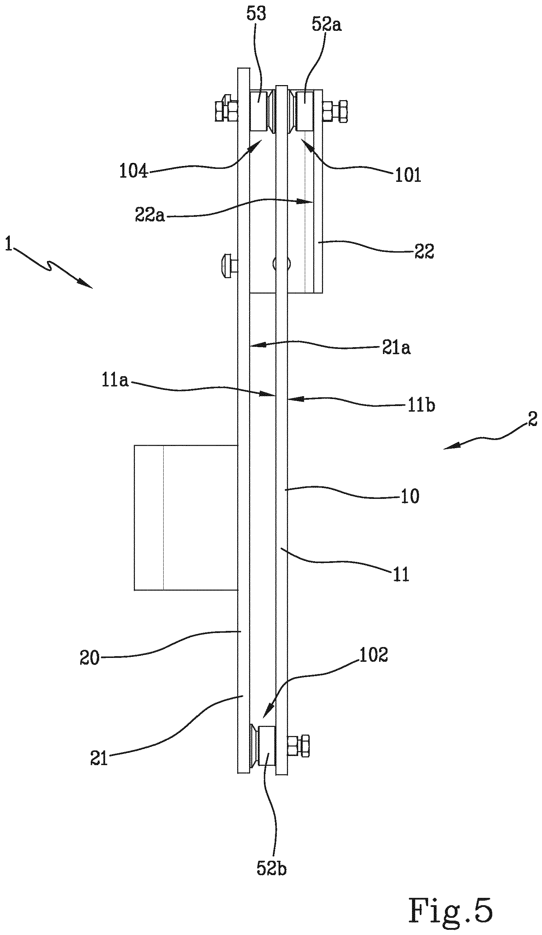

At a structural level, with reference to Figures 5, 6 and 7, according to another aspect of the invention, the fixed structure 10 may comprise at least one contact body 11 having a first wall 11a and a second wall 11b, positioned parallel to each other.

Moreover, the contact body 11 of the fixed structure 10 may comprise a third wall 11c, contiguous with the first wall 11a and the second wall 11b of the contact body 11.

According to the preferred embodiment, the fixed structure 10 comprises two contact bodies 11 which are mutually symmetrical to the vertical axis of symmetry "S", that is, positioned specularly with respect to the vertical axis of symmetry "S".

Preferably, the two contact bodies 11 are located close to respective flanks of the towing tractor 1. Preferably, the contact bodies 11 have a main direction of extension and are oriented parallel to the main vertical axis of extension "Y" of the backrest 4. Still more preferably, the contact bodies 11 are panel-shaped.

With reference to Figures 5, 6 and 7, the mobile structure 10 may comprise a main body 21 and an accessory body 22.

The main body has at least a first wall 21a.

The accessory body 22 is securely fixed or integral with the main body 21 and has at least a first wall 22a, parallel to the first wall 21a of the main body 21 of the mobile structure 20 and parallel to the first wall 11a and to the second wall 11b of the contact body 11 of the fixed structure 10.

The accessory body 22 of the mobile structure 20 may have a second wall 22b which, in use, is parallel to the third wall 11c of the contact body 11 of the fixed structure 10. In other words, the first wall 22a and the second wall 22b of the accessory body 22 may form an "L" shape.

According to a further aspect, the accessory body 22 has a main direction of extension and is oriented preferably in a parallel fashion to the vertical axis "Y" of the backrest 4.

The accessory body 22 may extend along the entire height of the backrest 4. Alternatively, the accessory body 22 may extend only partly along the height of the backrest 4.

Preferably, but without limiting the scope of the invention, the mobile structure 20 comprises a pair of accessory bodies 22 positioned mutually symmetrical with the vertical axis of symmetry "S".

More specifically, the accessory bodies 22 are positioned close to the flanks of the tractors 1.

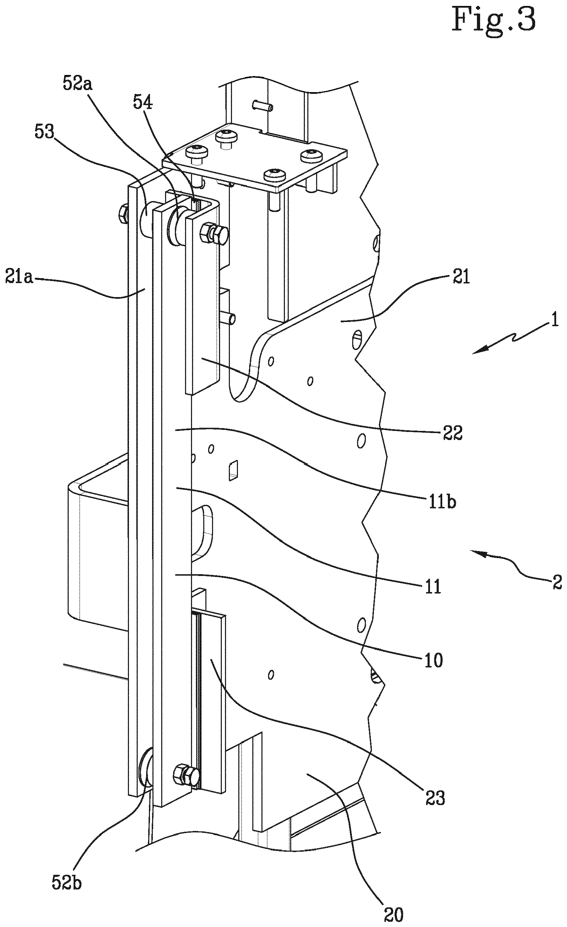

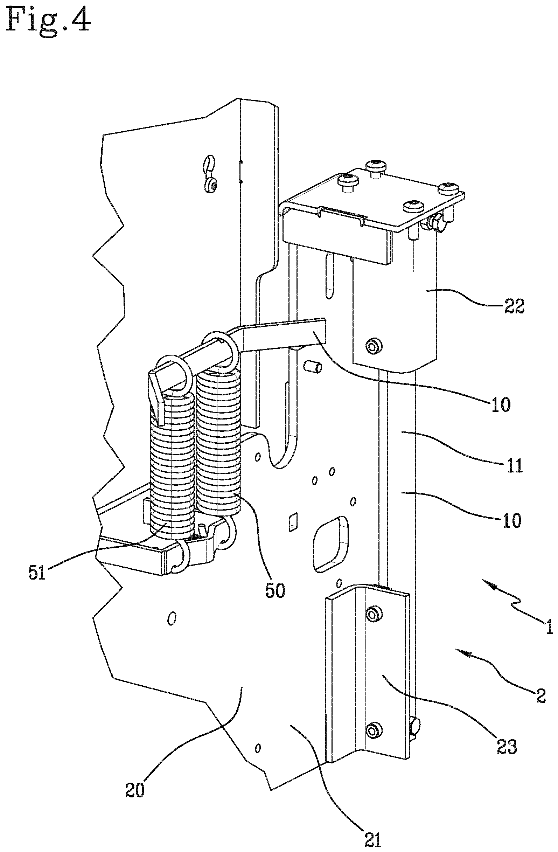

The mobile structure 20 may also comprise a further accessory body 23, illustrated by way of example in Figures 1, 3, 4 and 7.

This further accessory body 23 has a first wall 23a, parallel to the third wall 11c of the contact body 11 of the fixed structure 10.

Preferably, the mobile structure 20 comprises a pair of further accessory bodies 23, positioned specularly with respect to the vertical axis of symmetry "S". More specifically, the accessory bodies are positioned close to the flanks of the towing tractor.

Preferably, also, the pair of further accessory bodies 23 is located at a height lower than the pair of accessory bodies 22.

Again, preferably, each accessory body 23 is aligned with a respective accessory body 22.

Functionally, according to another aspect of the invention, the contact body 11 is, in use, at least partly interposed between the main body 21 and the accessory body 22.

In this way, the second wall 11b of the contact body 11 of the fixed structure 10 and the first wall 22a of the accessory body 22 of the mobile structure 20 can form at least a first housing seat 101.

Preferably, but without limiting the scope of the invention, the first housing seat 101 is configured to house a respective upper anti-rotational contact element 52a.

In the same way, the first wall 11a of the contact body 11 of the fixed structure 10 and the first wall 21a of the main body 21 of the mobile structure 20 can define at least a second housing seat 102.

Preferably, but without limiting the scope of the invention, the second housing seat 102 is configured to house a respective lower anti-rotational contact element 52b.

Further, the third wall 11c of the contact body 11 of the fixed structure 10 and the second wall 22b of the accessory body 22 of the mobile structure 20 can form at least a third housing seat 103.

Preferably, but without limiting the scope of the invention, the third housing seat 103 is configured to house a respective lateral contact element 54.

However, the first wall 11a of the contact body 11 of the fixed structure 10 and the first wall 21a of the main body 21 of the mobile structure 20 can define at least a fourth housing seat 104.

Preferably, but without limiting the scope of the invention, the fourth housing seat 104 is configured to house a respective front contact element 53.

When present, the third wall 11c of the contact body 11 of the fixed structure 10 and the first wall 23a of the further accessory body 23 of the mobile structure 20 can form at least a fifth housing seat 105.

Preferably, but without limiting the scope of the invention, the fifth housing seat 105 is configured to house a respective lateral contact element 54.

According to further aspect of the invention, each first housing seat 101 may be made at the same height as the fourth housing seat 104.

In other words, the upper anti-rotational contact element 52a, is, in use, substantially at the same height as the respective front contact element 53. The front contact element 53 is located at the above-mentioned first height.

Preferably, as shown in Figures 5 and 6, the upper anti-rotational contact element 52a and the front contact element 53 are aligned.

This technical feature further simplifies the structure of the towing tractor 1. Also, thanks to this arrangement, the upper anti-rotational contact element 52a acts in conjunction with the front contact element 53 with the aim of attenuating vibrations and impacts.

The invention achieves the above-mentioned aims, eliminating the drawbacks highlighted in the prior art: in this regard, it should be noted firstly that the contact elements 52a, 52b, 53, 54 as described and/or claimed allow the considerable simplification of the structure of the connecting apparatus 50 and, consequently, the structure of the towing tractor 1, considerably reducing production costs and times.

It should also be noted that the structure of the contact elements 52a, 52b, 53, 54 also allows the important advantage of guaranteeing, together with and in conjunction with the elastic means 51, an action for damping and attenuating the vibrations and/or the impacts which are generated during the driving of the towing tractor 1 and which are transmitted to the one or more operators, thus improving the comfort and the ergonomics of the latter.

## Claims

1. A towing tractor (1) comprising:
- a frame (2) having a platform (3), having a horizontal axis of extension (X), and a backrest (4) having a main vertical axis extension (Y); the frame (2) comprises a fixed structure (10) and a mobile structure (20) movably connected to the fixed structure (10) and configured to support at least partly one or more operators;
- a connecting apparatus (50), interposed between the fixed structure (10) and the mobile structure (20), configured to movably connect the mobile structure (20) to the fixed structure (10); the connecting apparatus (50) comprising elastic means (51) configured to determine a mechanical suspension of the mobile structure (20) with respect to the fixed structure (10);
**characterised in that** the connecting apparatus (50) comprises a plurality of contact elements (52a, 52b, 53, 54) designed to determine one or more end stops for respective degrees of freedom of movement of the mobile structure (20) with respect to the fixed structure (10).

2. The towing tractor (1) according to claim 1, wherein the connecting apparatus (50) comprises at least one pair of anti-rotational contact elements (52a, 52b) configured to define an end stop to a rotational movement of the mobile structure (20) with respect to the fixed structure (10).

3. The towing tractor (1) according to claim 2, wherein each pair of anti-rotational contact elements (52a, 52b) comprises an upper anti-rotational contact element (52a), operatively positioned at a first height and a lower anti-rotational contact element (52b), operatively positioned at a second height different from the first height, preferably less than the first height.

4. The towing tractor(1) according to claim 2 or 3, wherein the connecting apparatus (50) comprises two pairs of anti-rotational contact elements (52a, 52b); each pair of anti-rotational contact elements (52a, 52b) is symmetrical with respect to the other pair of anti-rotational contact elements (52a, 52b) to a vertical axis of symmetry (S).

5. The towing tractor (1) according to any one of the preceding claims, wherein the connecting apparatus (50) comprises at least one front contact element (53) configured to define an end stop to a movement of the mobile structure (20) and of the fixed structure (10) towards each other along a direction parallel to said horizontal axis (X).

6. The towing tractor (1) according to claim 5, wherein said connecting apparatus (50) comprises a pair of front contact elements (53) wherein each front contact element (53) is symmetrical with respect to the other front contact element (53) to a vertical axis of symmetry (S).

7. The towing tractor (1) according to any one of the preceding claims, wherein said connecting apparatus (50) comprises at least one pair of lateral contact elements (54) each of which designed to determine an end stop to a respective reciprocal movement between the mobile structure (20) and the fixed structure (10) along a direction transversal to said horizontal axis (X); preferably, the lateral contact elements (54) of each pair of lateral contact elements (54) being mutually symmetrical to a vertical axis of symmetry (S).

8. The towing tractor (1) according to any one of the preceding claims, wherein each contact element (52a, 52b, 53, 54) is interposed between a respective wall of the mobile structure (20) and a respective wall of the fixed structure (10) and comes into contact with at least one of either the wall of the mobile structure (20) and the wall of the fixed structure (10); the wall of the mobile structure (20) facing the wall of the fixed structure (10) defining a seat for housing the contact element (52a, 52b, 53, 54);

9. The towing tractor (1) according to claim 8, wherein the fixed structure (10) comprises at least one contact element (11), having a first wall (11a) and a second wall (11b) positioned parallel to each other, and wherein the mobile structure (20) comprises a main body (21), having at least a first wall (21a), and at least an accessory body (22) having at least one first wall (22a) positioned parallel to the first wall (21a) of the main body (21) and to the first wall (11a) and to the second wall (11b) of the contact body (11) of the fixed struture (10); the contact body (11) being interposed between the main body (21) and the accessory body (22) in such a way that the respective walls (11a, 11b, 21a, 22a) define at least a first housing seat (101) between the contact body (11) and the accessory body (22) and a second housing seat (102) between the contact body (11) and the main body (21).

10. The towing tractor (1) according to claim 9, wherein the contact body (11) has a third wall (11 c), contiguous with the first wall (11a) and with the second wall (11b) of the contact body (11), and wherein the accessory body (22) has a second wall (22b), parallel to the third wall (11c) of the contact body (11); the third wall (11c) of the contact body (11) and the second wall (22b) of the accessory body (22) defining at least a third housing seat (103).

11. The towing tractor (1) according to claim 9 or 10, wherein the first wall (11a) of the contact body (11) and the first wall (21a) of the main body (21) define at least a fourth housing seat (104).

12. The towing tractor (1) according to any one of claims 9 to 11, wherein the fixed structure (10) comprises a pair of contact bodies (11) mutually symmetrical with respect to the vertical axis of symmetry (S) and wherein the mobile structure (20) comprises at least a pair of accessory bodies (22) which are mutually symmetrical with respect to the vertical axis of symmetry (S).

13. The towing tractor (1) according to any one of claims 9 to 12, wherein the first housing seat and the second housing seat are configured to house, respectively, the upper anti-rotational contact element (52a) and the lower anti-rotational contact element (52b).

14. The towing tractor (1) according to any one of claims 10 to 13, wherein each third housing seat is configured to house a respective lateral contact element (54).

15. The towing tractor according to any of claims 11 to 14, wherein the fourth housing seat is configured to house a respective front contact element (53).

16. The towing tractor (1) according to any one of the preceding claims, wherein each of said plurality of contact elements (52a, 52b, 53, 54) comprises:
- a contact surface (55) made at least partly of said polymeric material and configured to make contact against the mobile structure (20) or the fixed structure (10);
- a fixing element (56), preferably a threaded element, configured for securely fixing said contact surface (55) to the fixed structure (10) or to the mobile structure (20).

17. The towing tractor according to any of the preceding claims, wherein said elastic means (51) comprise springs and/or dampers operatively interposed between the mobile structure (20) and the fixed structure (10).
